# EUROPÄISCHE PATENTSCHRIFT

(11) **EP 0 692 089 B1**
(45) Veröffentlichungstag und Bekanntmachung des Hinweises auf die Patenterteilung: **08.10.1997**
(21) Anmeldenummer: 94912535.5
(22) Anmeldetag: 24.03.1994
(51) Int. Cl.: G01J 3/46

(54) **PRODUKTIONSNAHE FARBKONTROLLE MIT BILDGEBENDEN SENSOREN**
COLOUR CONTROL BY IMAGE-FORMING SENSORS CLOSE TO PRODUCTION POINT
CONTROLE DE COULEURS SE FAISANT A PROXIMITE DU LIEU DE PRODUCTION AU MOYEN DE CAPTEURS FORMANT DES IMAGES

(30) Priorität: 28.03.1993 DE 4309802
(43) Veröffentlichungstag der Anmeldung: 17.01.1996
(73) Patentinhaber: Massen, Robert, Prof. Dr., D-78337 Öhningen (DE)
(72) Erfinder: Massen, Robert, Prof. Dr., D-78337 Öhningen (DE)
(74) Vertreter: Leiser, Gottfried, Dipl.-Ing.
(86) Internationale Anmeldenummer: EP9400942
(87) Internationale Veröffentlichungsnummer: WO9423276

(56) Entgegenhaltungen:
- WO-A-93/13878
- DE-A- 3 922 176
- US-A- 4 812 904
- US-A- 5 206 918
- JOURNAL OF ELECTRONIC IMAGING, Bd.2, Nr.4, Oktober 1993, BELLINGHAM, WA,US Seiten 359 - 370 R.S.BERNS 'Spectral modeling of a dye diffusion thermal transfer printer'

## Beschreibung

Die Erfindung betrifft ein Verfahren und eine Anordnung zur Farbkontrolle im Produktionsprozeß, bei welchem ein Prüfling und eine Referenz des Prüflings mit Hilfe der gleichen Anordnung aus einem oder mehreren farbtüchtigen bildgebenden Sensoren, insbesondere Farbmatrixkameras, Farbzeilenkameras oder farbtüchtigen Punktabtastern bildpunktweise erfaßt werden.

Die laufende Kontrolle und Überprüfung der Farbtreue von Produkten ist eine wichtige Stufe in der Qualitätssicherung. Neben der manuellen, qualitativen Überprüfung der Farbtreue durch visuellen Vergleich der Produktfarbe mit Kontrollkarten oder Referenzproben exisitiert eine gut entwickelte Farbmeßtechnik zur quantitativen Bestimmung der Farbe bzw. der Farbabweichungen von einem Prüfling zu einer Referenz.

Im wesentlichen werden zwei Klassen von Verfahren eingesetzt:
1. Verfahren auf der Basis der Auswertung des Farbspektrums des Produktes,
2. Verfahren auf der Basis der Ausmessung der Primärfarben des farbigen Produktes.

Bei beiden Verfahren hat die Struktur der Oberfläche, wie Krümmung im Raum, aufgebrachte Texturen, Rillen, Kratzer o.ä., einen großen, störenden Einfluß auf das Meßergebnis. Die bekannten Verfahren verlangen daher auch, daß die Farbmessung an einer im wesentlichen diffus reflektierenden und ebenen Probe durchgeführt wird. Unebene Stellen, Glanzstellen sowie Stellen mit Schattenwurf müssen unbedingt vermieden werden. Außerdem muß sichergestellt werden, daß im Meßfenster des Farbmeßgerätes nur die zu messende Farbe vorhanden ist und keinerlei andere, z.B. farbige Markierungen, Aufdrucke, Etikette o.ä. Da zahlreiche Produkte wie z.B. extrudierte Kunststoffe zur Herstellung von Bodenbelägen, fertig lackierte Karosserieteile, Lebensmittel wie Backwaren, Gemüse, Druckerzeugnisse usw. diese Voraussetzungen nicht erfüllen, begnügt man sich damit, kleine flache Prüfvorlagen mit einzufärben und im Labor nachzumessen. So ist es z.B. üblich, bei der Herstellung von Linoleum-Fußböden Proben aus der extrudierten und eingefärbten Bodenbelagsmasse zu entnehmen, diese auf flache Kartonflächen einzuwalzen, so daß eine ebene und diffuse Oberfläche entsteht, und diese Probe im Farblabor auszumessen. Dieser Vorgang ist zeitraubend, manuell und nicht direkt am Prozeß durchzuführen; beim Vorliegen der Ergebnisse sind evtl. bereits nennenswerte Partien mit ungenügender Farbtreue erzeugt worden.

Bei einem aus dem Dokument US-A-4 812 904 bekannten Verfahren der eingangs angegebenen Art, bei dem als bildgebender Sensor eine Farbvideokamera verwendet wird, werden die von der Farbvideokamera bei der Erfassung des Prüflings und bei der Erfassung der Referenz abgegebenen Farbwertsignale bildpunktweise digitalisiert und gespeichert. Zur Farbkontrolle werden die gespeicherten Farbvektorkomponenten des Prüflings und der Referenz statistisch verglichen. Dies geschieht beispielsweise dadurch, daß die Mittelwerte der Farbvektorkomponenten für den Prüfling und für die Referenz gebildet werden und daß festgestellt wird, ob die Mittelwerte der Farbvektorkomponenten des Prüflings um mehr als eine vorgegebene Toleranzschwelle von den Mittelwerten der Farbvektorkomponenten der Referenz abweichen. Die Reduzierung des Vergleichs auf Mittelwerte und auf das Überschreiten vorgegebener Toleranzschwellen ergibt jedoch nur eine Ja/Nein-Aussage darüber, ob eine Farbabweichung vorliegt oder nicht; dagegen wird kein Maß für die Größe der Farbabweichung erhalten.

Aufgabe der Erfindung ist die Schaffung eines Verfahrens und einer Anordnung der eingangs angegebenen Art, die in der Lage sind, die Farbabweichung eines Produktes schnell, kontinuierlich und weitgehend automatisch zu erfassen und ein oder mehrere Farbabweichungsmaße für die Größe der Farbabweichungen zu liefern.

Diese Aufgabe wird gemäß der Erfindung durch die folgenden Verfahrensschritte gelöst:
- die Farbwerte aller Bildpunkte oder einer Untermenge der Bildpunkte im gesamten Bildfeld oder in einzelnen Teilen des Bildfeldes des bzw. jedes die Referenz erfassenden Sensors werden in die Form eines oder mehrerer mehrdimensionaler Histogramme der Farbvektorkomponenten gebracht und in dieser Form abgespeichert,
- in gleicher Weise werden die Farbwerte aller Bildpunkte oder einer Untermenge der Bildpunkte im entsprechenden Bildfeld bzw. in den entsprechenden Teilen des Bildfeldes des bzw. jedes den Prüfling erfassenden Sensors in die Form eines oder mehrerer mehrdimensionaler Histogramme der Farbvektorkomponenten gebracht,
- aus dem Vergleich der Histogramme des Prüflings und der Histogramme der Referenz wird für jedes zu kontrollierende Bildfeld bzw. für jeden zu kontrollierenden Teil eines Bildfelds ein oder mehrere Farbabweichungsmaße bestimmt.

Eine Anordnung zur Durchführung des Verfahrens wird durch die Merkmale des Anspruchs 26 definiert.

Das Verfahren soll beispielhaft, aber nicht einschränkend anhand der Farbkontrolle von lackierten Autokarosserien erläutert werden. Hierzu wird auf folgende Abbildungen Bezug genommen:
- Fig. 1: zeigt die Abspeicherung der Farbvektorkomponenten eines Bildausschnittes eines Karosserieteils, welches sowohl Glanzstellen als auch Schattenzonen enthält, wobei der IHS-Farbraum verwendet wird;
- Fig. 2: zeigt das Häufigkeitshistogramm der Farbvektorkomponenten, zur verständlicheren Darstellung reduziert auf die Komponenten I und H, sowie die Beseitigung von Glanz- und Schattenzonen durch eine Schwellwertbildung;
- Fig. 3: verdeutlicht die Farbkontrolle aus der Abweichung des Histogramms der Farbvektorkomponenten der Referenz zum Histogramm des Prüflings, zur Verdeutlichung reduziert auf die Komponente "Farbton";
- Fig. 4: verdeutlicht die Gewinnung von geglätteten Histogrammen durch Mitinkrementieren der Nachbarwerte;
- Fig. 5: verdeutlicht die Reduzierung der Histogramme durch Schwellwertbildung auf eine binäre Markierung derjenigen Farbvektorkomponenten, welche diese Schwelle überschreiten.

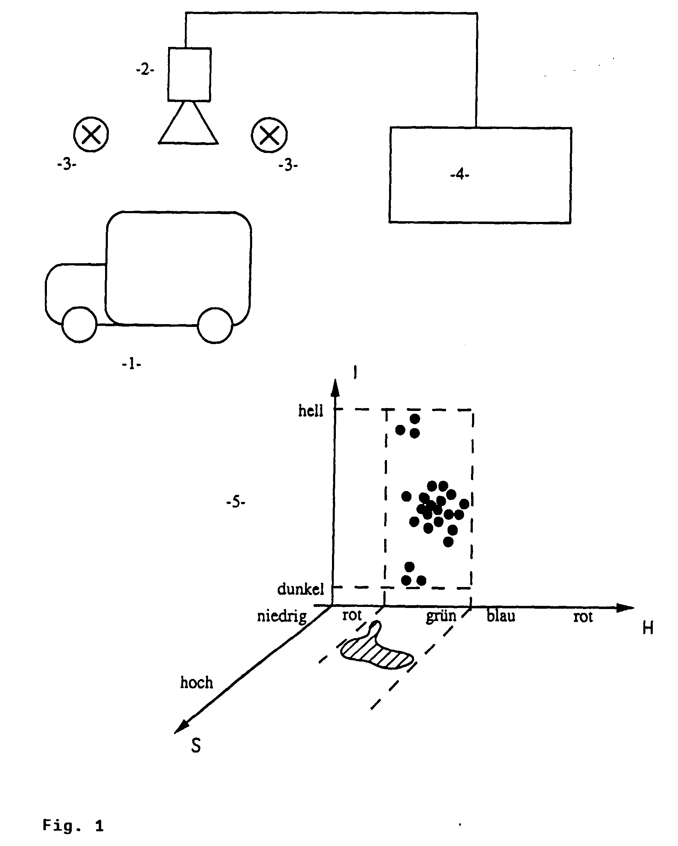

Das Verfahren sei am Beispiel der Farbkontrolle an der Lackierstraße von Autokarosserien verdeutlicht. Es wird auf Fig. 1 verwiesen. Die Karosserie -1- wird von einer oder mehreren Beleuchtungseinrichtungen -3- möglichst gleichmäßig beleuchtet und von einer oder mehreren Farbkameras -2- bildhaft erfaßt. Die elektrischen Signale werden an einen Rechner -4- weitergeleitet, in dem die erfindungsgemäßen Verfahrensschritte durchgeführt werden. Es wird beispielhaft davon ausgegangen, daß die Signale der Farbkameras im IHS-Farbraum (I = "Intensity" = Helligkeit; H = "Hue" = Farbton; S = "Saturation" = Sättigung) vorliegen bzw. in diesen Farbraum transformiert werden. Dies ist zwar keine zwingende Vorausetzung des Erfindungsgedankens, erleichtert aber die Erklärung des zugrundeliegenden Prinzips.

Die von der Kamera erfaßte Stelle ist weder diffus noch eben noch gleichmäßig, wie dies bei den bekannten Farbmeßverfahren vorausgesetzt wird. So bilden sich an Falzstellen Glanzstellen aus, oder an Taschen, Türspalten, Türgriffen entstehen Schattenzonen. Erfindungsgemäß wird die beobachtete Fläche nicht integral erfaßt und hieraus entweder ein Satz von 3 Primärfarben (RGB, Lab, Luv o.ä.) oder ein Spektrum ermittelt, sondern es wird das dreidimensionale Histogramm der Farbvektorkomponenten aller Bildpunkte in dem von der Farbkamera erfaßten Bildauschnitt gebildet. Detail -5- zeigt zur Verdeutlichung, wie die Farbvektoren in dem gewählten IHS-Farbraum verteilt sind.

Infolge der nicht gleichmäßig diffusen Oberfläche, infolge von Systemrauschen der Meßanordnung und infolge der prozeßbedingten lokalen Farbschwankungen streuen die gemessenen Farbvektoren und bilden eine "Wolke" von Farbvektoren im Farbraum. Zur besseren Erkennung ist die Projektion dieser Wolke auf die HS-Ebene schraffiert dargestellt. Glanzstellen und Schattenstellen lassen sich als Ausreißer dieser Farbwolke erkennen: sie entsprechen Farbvektoren mit niedriger Sättigung und entweder hoher Intensität (bei Glanzstellen) oder niedriger Intensität (bei Schattenstellen). Damit ist es durch eine einfache Schwellwertoperation möglich, solche Farbvektoren automatisch zu erkennen und von der Farbkontrolle auszuschließen. Ebenso lassen sich erfindungsgemäß Ausreißer entlang der Farbton-Achse, z.B. infolge des Hereinragens einer nicht-gewollten andersfarbigen Zone, einer Markierung, eines Etiketts o.ä. automatisch erkennen und aus der Farbkontrolle ausschließen.

Diese automatische Erkennung ungültiger Bereiche ist nur durch die erfindungsgemäße Verwendung bildgebender Farbsensoren möglich und ist mit den derzeitig eingesetzten, über das Meßfeld integrierenden Farbmeßgeräten prinzipiell nicht möglich.

Erfindungsgemäß erfolgt die Farbkontrolle anhand des mehrdimensionalen Histogramms der Farbvektorkomponenten. Während Fig. 1 im Detail -5- eine Anzahl von unterschiedlichen Farbvektoren als Punktewolke im IHS-Raum darstellt, läßt sich in einer solchen Graphik nicht darstellen, wie häufig ein bestimmter Farbvektor in dem betrachteten Bildauschnitt vorgekommen ist. Bei üblichen Auflösungen von Farbmatrixkameras mit 400.000 Farbbildpunkten (Farb-"pixels") trifft es naturgemäß sehr häufig zu, daß der gleiche Farbvektor mehrmals angetroffen wird. Bei einer ideal reinen Farbe und einem idealen, rauschfreien Meßsystem müßte sogar der gleiche Farbvektor 400.000mal eintreffen und damit die Wolke zu einem Punkt zusammenschrumpfen.

Um die Häufigkeit der IHS-Komponenten darzustellen, benötigt man eine 3 + 1 = 4-dimensionale Darstellung, welche sich als schwarz-weiße Vorlage nicht mehr skizzieren läßt. Wir werden daher zur Verdeutlichung des Erfindungsgedanken die Histogramme der Farbkomponenten nicht als 3-dimensionales Histogramm, sondern vereinfacht als 2-dimensionales Histogramm der Komponenten H und S bzw. als 1-dimensionales Histogramm der Komponente H darstellen und an dieser vereinfachten Darstellung erläutern.

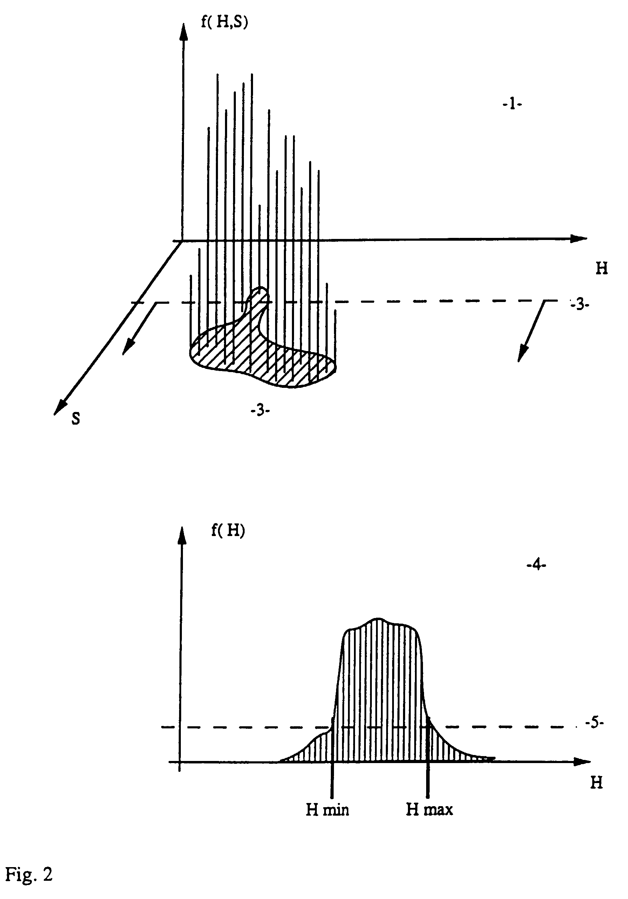

Fig. 2 zeigt das HS-Histogramm des Beispiels aus Fig. 1. Hierbei steht f(H,S) für die Verbund-Häufigkeit, d.h. die Häufigkeit, mit der ein bestimmter Wert H und ein bestimmter Wert S vorkommt. Das Detail -1- in Fig. 2 zeigt diese 2-dimensionale Häufigkeitsverteilung. Man erkennt hieraus, daß bestimmte Farbkomponenten wesentlich häufiger vorkommen als andere. Man erkennt ebenfalls den Wertebereich der vorkommenden H- und S-Werte.

In ähnlicher Weise muß man sich das dreidimensionale Histogramm f(I,H,S) vorstellen als die Angabe der Häufigkeiten, mit welcher bestimmte I,H,S Kombinationen vorkommen. Wenn auch ein solches Histogramm graphisch nicht mehr skizzierbar ist, so läßt es sich doch rechnerisch in Form eines dreidimensionalen Feldes verwirklichen.

Die erfindungsgemäße Erfassung des Histogramms f(I,H,S) der im betrachteten Bildauschnitt erfaßten Farbbildpunkte erlaubt über die Betrachtung des Wertebereichs der vorkommenden Komponenten I,H,S hinaus eine weitere, praktisch wichtige automatische Aussortierung von unsicheren Farbmeßwerten: alle Farbwerte, welche zu selten vorkommen, können als Störungen betrachtet und automatisch von der weiteren Kontrolle ausgeschlossen werden. Dies sind z.B. alle Farbpixel, welche sich auf dem Rand eines Gebietes mit einheitlicher Farbe befinden. Farbwerte auf einer solchen "Farbkante" sind immer unsicher, da sie sich in einem Übergangsbereich zwischen zwei Farben befinden. Durch Einführen einer weiteren Schwelle -5- können alle solchen Farbvektoren ausgeblendet werden, deren Häufigkeit zu niedrig ist, um als signifikante Farbe angesehen werden zu können.

Die erfindungsgemäße Anwendung eines bildgebenden Farbsensors mit sehr vielen Farbbildpunkten und die Erstellung eines mehrdimensionalen, in der Regel dreidimensionalen Histogramms der Farbvektorkomponenten ermöglicht damit die automatische Ausblendung von:
a) Glanzstellen und Schattenzonen solcher Farbvektoren, deren Komponenten außerhalb eines vorgebenen, zulässigen Wertebereichs liegen,
b) unsicherer Farbvektoren, welche zu selten vorkommen, um als signifikant zu gelten.

Da durch die Anwendung von bildgebenden Farbkameras die Farbkontrolle auch nach dem Ausblenden ungültiger und unsicherer Farbwerte immer noch über eine, verglichen mit dem punktweise arbeitenden traditionellen Farbmeßgerät, extrem hohe Anzahl separater Farbpixel erfolgt, sind infolge der dem Histogramm zugrundeliegenden Statistik trotz des relativ schlechten Signal/Rauschverhältnisses des einzelnen Farbpixels dennoch ausgezeichnet stabile Histogramme erzielbar.

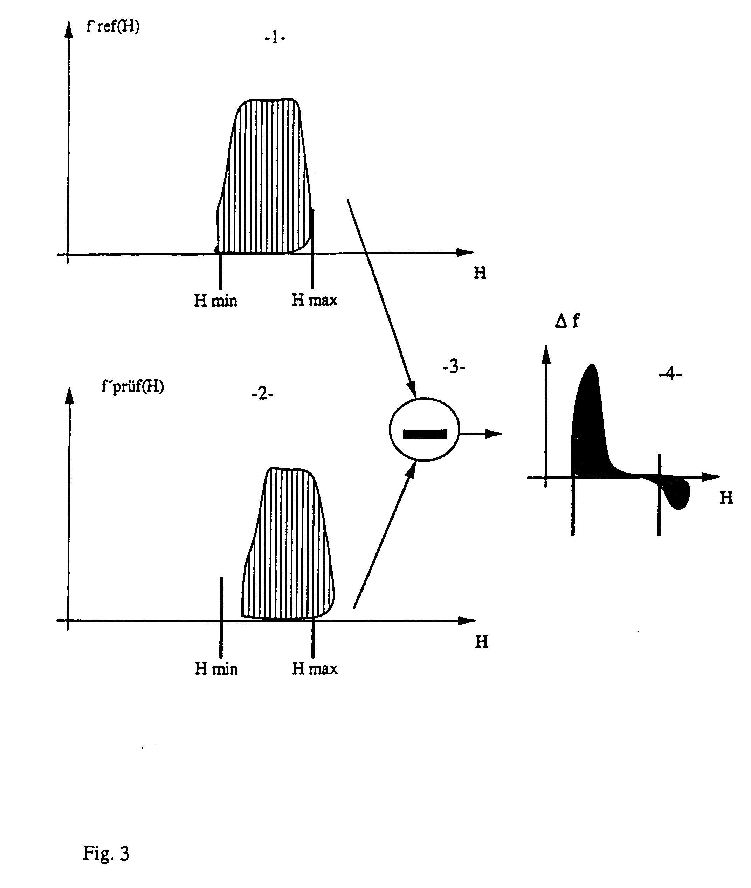

Die Farbkontrolle erfolgt erfindungsgemäß durch Vergleich des entsprechend über Schwellwertbildungen modifizierten mehrdimensionalen Histogramms f_{ref}(I,H,S) der Referenz mit dem Histogramm f_{prüf}(I,H,S) des Prüflings, wie in Fig. 3 verdeutlicht.

Wir haben hierbei zum besseren Verständnis nur das 1-dimensionale Histogramm f(H) skizziert. Das Detail -1- in Fig. 3 zeigt den Verlauf des gelernten Histogramms der Referenz, das Detail -2- das entsprechende Histogramm des Prüflings, welcher sich durch eine leichte Verschiebung des Farbtons hin zu GRÜN von der Referenz unterscheidet. Als Vergleichsmaß wird beispielhaft die Differenz Δf der beiden Histogramme verwendet. Diese Differenzfunktion kann zu einem Skalar verdichtet werden, z.B. zu der normierten oder nichtnormierten Fläche unterhalb des Δf-Verlaufs. Es sind auch andere skalar verdichtete Aussagen sinnvoll, wie z.B. die Lage des Schwerpunktes oder höherer Flächenmonente des Differenzhistogramms Δf.

Neben der reinen Differenz sind auch gewichtete Differenzen, Differenzen der Quadrate und ähnliche Abstandsmaße, wie sie auch dem Fachmann der Mustererkennung und Klassifikation bekannt sind, einsetzbar. Damit lassen sich auf die einzelne Problemstellung angepaßte Vergleichsmaße bei gleichem Systemaufbau entwickeln.

Fig. 3 verdeutlicht den Erfindungsgedanken am Beispiel des auf eine Dimension reduzierten Histogamms f(H). Natürlich wird im allgemeinen das Differenzhistogramm der 3-dimensionalen Histogramme f_{ref}(I,H,S) und f_{prüf}(I,H,S) gebildet und hieraus ein entsprechendes skalares Abstandsmaß gewonnen. Diese skalaren Abstandsmaße können in einer normierten Prozent-Skala die Gesamtabweichung zwischen der Farbe, der Referenz und der Farbe des Prüflings angeben und stellen eine auch für ungelerntes Bedienungspersonal leicht verständliche Angabe dar. Selbstverständlich kann man dieses Maß auch elektronisch als Stellsignal für eine Qualitätssortierung verwenden.

Es ist selbstverständlich, daß statt eines Abstandsmaßes auch die komplementäre Angabe, das Übereinstimmungsmaß als Angabe der Farbtreue, ausgegeben werden kann.

Die skalaren Abstandsmaße liefern keinen Rückschluß auf die Art der Farbverschiebung, wie sie bei den traditionellen Farbmeßgeräten als Δf(L,a,b)-Werte angegeben wird.

Es ist daher ein weiterer Gedanke dieser Erfindung, die drei Abweichungs-Histogramme Δf'(I), Δf'(H) und Δf'(S) zu einem Abweichungsvektor Δ(I,H,S) zu verdichten, aus dem der Benutzer die Art der Farbabweichung ermitteln kann. Dieser Abweichungsvektor läßt sich mit den aus der Farbtheorie bekannten Umrechnungsverfahren in übliche Differenzmaße, wie z.B. die erwähnten Δ(L,a,b)-Werte, umrechnen und anzeigen. Damit lassen sich die mit der erfindungsgemäßen Farbkontrolle ermittelten Werte in gewohnter Weise darstellen und interpretieren.

Die Bestimmung eines dreidimensionalen Histogramms geschieht zweckmäßigerweise durch Inkrementieren eines dreidimensionalen Akkumulationsfeldes. Jeder Farbbildpunkt aus dem Referenzbildausschnitt liefert nach Transformation in den I,H,S Farbraum einen Adreßzeiger, welcher sich aus der Aneinanderreihung der drei digitalisierten Komponenten seines Farbvektors ergibt. Dieser Adreßzeiger zeigt auf ein zu Beginn der Lernphase auf Null gesetztes Akkumulationsfeld; die jeweils adressierte Speicherzelle wird inkrementiert. Bei einer Digitalisierung der einzelnen Farbvektorkomponenten in jeweils 8 Bit hat diese Tabelle eine Grösse von 2²⁴* N Bit, mit N >= ld Zmax. Hierbei ist Zmax die maximale Anzahl von möglichen gleichen Farbvektoren, bei einem Bildsensor mit 400.000 Farbpixel also 400.000. Durch diese Art der Akkumulierung in einem dreidimensionalen Feld entsteht die absolute Häufigkeitsfunktion, welche durch Division mit der Anzahl der verwendeten Pixel in eine relative Häufigkeitsfunktion, das eigentliche Histogramm, umgerechnet wird. Trotz der i.a. sehr zahlreichen Farbpixel wird dieses dreidimensionale Histogramm zahlreiche Leerstellen enthalten, weil es sehr unwahrscheinlich ist, daß alle IHS-Kombinationen innerhalb des vorliegenden Farbgebietes wirklich vorkommen.

Es ist daher ein weiterer Erfindungsgedanke, diese Leerstellen durch eine dreidimensionale Glättung zu schließen. Erfindungsgemäß geschieht dies durch eine dreidimensionale Faltung mit einem ebenfalls dreidimensionalen Filterkern, welcher z.B. einer dreidimensionalen Gaußfunktion entspricht. Eine andere nützliche Art der Schließung von Leerstellen sind dreidimensionale morphologische Operationen wie die Dilatation oder das Closing. Beide Verfahren sind dem Fachmann der digitalen Bildverarbeitung bekannt und brauchen nicht weiter erklärt zu werden. Es wird hierzu auf die entsprechende Literatur verwiesen, z.B. Haberäcker: Digitale Bildverarbeitung, Hanser Verlag.

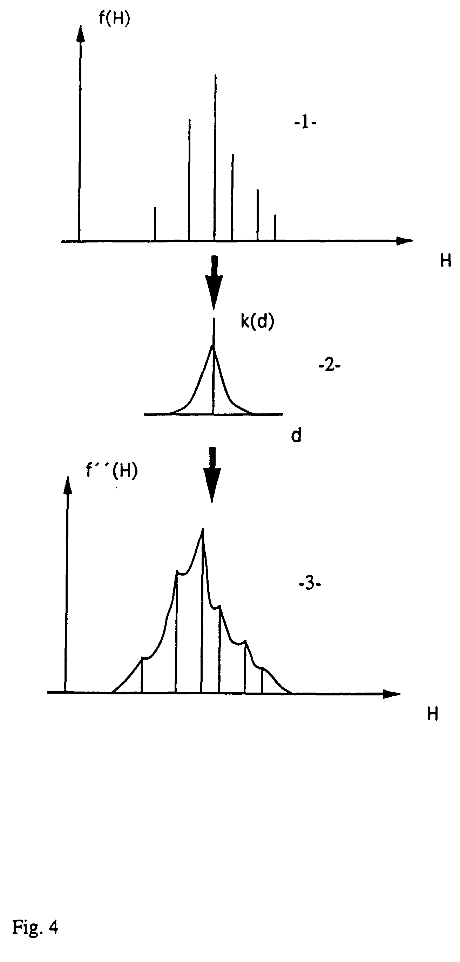

Ein weiterer Erfindungsgedanke ist, das nur lokal besetzte Histogramm durch ein Verfahren zu schließen, welches dem menschlichen Prinzip der "Verallgemeinerung" entspricht. Die einzelnen, in der Trainingsphase angetroffenen Farbpixel liefern Farbvektoren, welche als Repräsentanten eines stochastischen Prozesses aufgefaßt werden. Die verbleibenden Leerstellen, wie in Fig. 4, Detail -1- dargestellt, sind rein zufällig bedingt. Die "Verallgemeinerung" besagt, daß die Tatsache, daß genau ein betrachtes Feld im Akkumulationsfeld besetzt ist und die benachbarten Felder leer sind, keine Bedeutung im Sinne einer Farbabweichung hat, sondern lediglich in der zu kleinen Stichprobe beruht. Es ist daher sinnvoll, die benachbarten Stellen zu schließen, wobei Nachbarschaft im Sinne der geometrischen, z.B. euklidischen Distanz der Farbvektoren zu verstehen ist. Erfindungsgemäß wird diese Verallgemeinerung dadurch erreicht, daß nicht nur der durch den IHS-Adreßzeiger angesprochene Speicherplatz inkrementiert wird, sondern auch seine geometrischen Nachbarn, allerdings mit einem mit zunehmender Entfernung abklingenden Anteil. Diese Abklingfunktion k(d) -2- sorgt dafür, daß geschlossene Histogramme -3- entstehen, welche keine zufälligen Leerstellen mehr besitzen.

Es ist ein weiterer Erfindungsgedanke, daß diese Verallgemeinerungsfunktion für die drei Komponenten I,H,S unterschiedlich sein kann. Möchte man eine Farbkontrolle relativ unabhängig von der Helligkeit I durchführen, weil z.B. ein Wegwandern der Helligkeit für die Qualität weniger wichtig ist als ein Wegwandern des Farbtons und der Farbsättigung, so wird man eine Abklingfunktion k(d) wählen, welche entlang der I-Komponente langsamer abklingt als entlang der H- und S- Komponente. Hierdurch wird das Histogramm in I-Richtung verbreitert und somit ein Wegwandern der Intensität weniger stark in das Differenzhistogramm Δf eingehen als ein Wegwandern von H und S. Der gleiche Erfindungsgedanke kann auch auf die Glättungs- und morphologischen Operatoren angewendet werden, indem auch diese Operatoren einen entsprechend rotations-unsymmetrischen Kern erhalten.

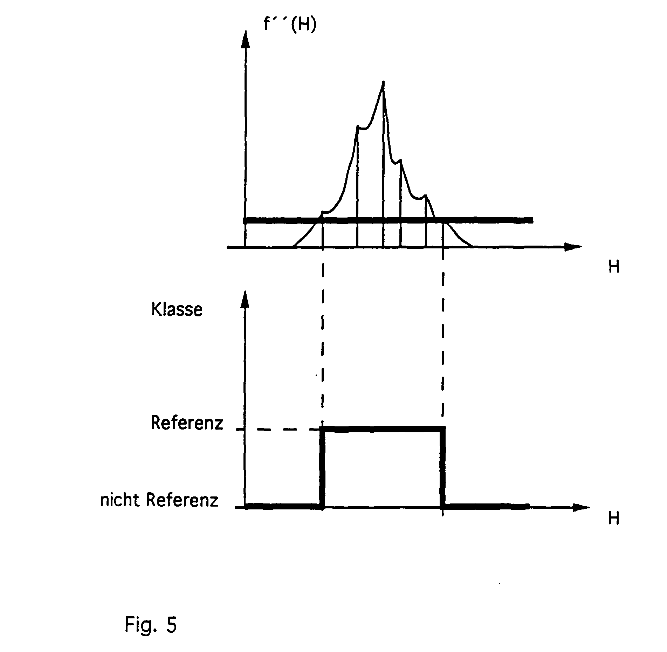

Das erfindungsgemäße Verfahren der Farbkontrolle kann weiter vereinfacht werden, indem nicht die gesamten Histogramme f'(I,H,S) der Referenz und des Prüflings verglichen werden, sondern diese Histogramme durch eine Schwellwertoperation binarisiert werden. Fig. 5 zeigt, wie durch eine Binarisierung das Histogramm zu einer Klassenzugehörigkeitsfunktion verdichtet wird. Alle Werte des Histogrammfeldes, welche die Schwelle überschreiten, werden mit einem Code besetzt, welcher die Information enthält: "Dieser Farbvektor gehört zur gelernten Referenz". Hierdurch entsteht eine binäre Tabelle sowohl für die Referenz als auch für den Prüfling. Als Vergleichsmaß beider Histogramme können skalare Maße, wie die Anzahl sich unterscheidender Speicherstellen, oder vektorielle Maße, wie die für jede Komponente getrennt ermittelte Anzahl unterschiedlicher Speicherstellen, ermittelt werden. Diese Operationen sind reine Zähloperationen. Sie können erfindungsgemäß in Videoechtzeit durchgeführt werden, indem sowohl der Tabellenspeicher als auch das entsprechende Zählwerk mit Digitalbausteinen, wie statischen Speichern und Zählern, realisiert wird.

Ein Übereinstimmungsmaß zwischen Referenz und Prüfling anhand solcher binarisierten Histogramme läßt sich besonders einfach herleiten, indem die Farbvektoren der relevanten Bildpunkte des Prüflings das Histogrammfeld der Referenz adressieren und jedesmal ausgelesen wird, ob dieser Speicherplatz mit einer Markierung "gehört zur Farbreferenz" belegt ist. Die Summe aller ausgelesenen Speicherplätze, welche diese Markierung aufzeigen, ist ein Maß für die Farbübereinstimmung zwischen Referenz und Prüfling.

Ein weiterer Erfindungsgedanke ist es, das Lernen der Referenz nicht auf die Herleitung des Histogramms der interessierenden Bildpunkte zu beschränken. Befinden sich im Bildfeld z.B. unerwünschte Partien mit einer für die Farbkontrolle nicht relevanten Farbe, z.B. Etikette, Markierungen, Aufkleber, Schraublöcher usw., so werden diese dadurch eliminiert, daß die Bildpunkte dieser Bereiche den Histogrammakkumulator nicht inkrementieren, sondern dekrementieren. Hierzu ist es natürlich notwendig, daß diese Bereiche entweder automatisch erkannt werden (z.B. anhand des Wertebereichs den Farbkompomonenten, anhand ihrer Form und Lage im Bildfeld mit Methoden der Mustererkennung) oder daß sie interaktiv markiert werden. Durch das Dekrementieren wird erreicht, daß in den kritischen Randzonen zwischen zu kontrollierendem Farbgebiet und angrenzendem, irrelevanten Gebiet ein steilerer Abfall des Histogramms entsteht und damit weniger Fehlstellen in diesem unsicheren Bereich entstehen.

Am Beispiel der Farbkontrolle von Autokarosserien wird erfindungsgemäß die Farbkontrolle mit mehreren Farbkameras gleichzeitig durchgeführt, wobei zweckmäßigerweise durch eine externe Triggereinrichtung die Aufnahmen dann ausgelöst werden, wenn sich die interessierenden Partien im Bildfeld befinden. Erfindungsgemäß können diese Partien aber auch mit bekannten Methoden der Bildverarbeitung und Mustererkennung automatisch gefunden werden. Dies ist eine für die Messung in der Produktion sehr wichtige Möglichkeit, da in der Regel die Produkte nicht sehr genau an den Kameras vorbeigeführt werden können. Diese Art der automatisch Festlegung und Nachführung der Kontrollzonen ist mit traditionellen, nicht bildgebenden Farbmeßgeräten nicht möglich.

Erfindungsgemäß erfolgt bei bewegten Prüflingen die Bildaufnahme mit stroboskopischer Beleuchtung bzw. verkürzter Integrationszeit des Bildsensors.

## Patentansprüche

1. Verfahren zur Farbkontrolle im Produktionsprozeß, bei welchem ein Prüfling und eine Referenz des Prüflings mit Hilfe der gleichen Anordnung aus einem oder mehreren farbtüchtigen bildgebenden Sensoren, insbesondere Farbmatrixkameras, Farbzeilenkameras oder farbtüchtigen Punktabtastern bildpunktweise erfaßt werden, gekennzeichnet durch die folgenden Verfahrensschritte:
- die Farbwerte aller Bildpunkte oder einer Untermenge der Bildpunkte im gesamten Bildfeld oder in einzelnen Teilen des Bildfeldes des bzw. jedes die Referenz erfassenden Sensors werden in die Form eines oder mehrerer mehrdimensionaler Histogramme der Farbvektorkomponenten gebracht und in dieser Form abgespeichert,
- in gleicher Weise werden die Farbwerte aller Bildpunkte oder einer Untermenge der Bildpunkte im entsprechenden Bildfeld bzw. in den entsprechenden Teilen des Bildfeldes des bzw. jedes den Prüfling erfassenden Sensors in die Form eines oder mehrerer mehrdimensionaler Histogramme der Farbvektorkomponenten gebracht,
- aus dem Vergleich der Histogramme des Prüflings und der Histogramme der Referenz wird für jedes zu kontrollierende Bildfeld bzw. für jeden zu kontrollierenden Teil eines Bildfelds ein oder mehrere Farbabweichungsmaße bestimmt.

2. Verfahren nach Anspruch 1, dadurch gekennzeichnet, daß automatisch störende Glanzstellen und/oder Schattenzonen und/oder Bereiche mit unsicheren Farbwerten ausgeblendet werden indem durch Schwellwertbildung im Histogramm der Farbvektorkomponenten die Bereiche beseitigt werden, welche eine zu geringe Sättigung und/oder eine zu stark abweichende Helligkeit und/oder einen unzulässigen Bereich des Farbtons und/oder eine zu geringe Häufigkeit besitzen, und daß ein Farbabweichungsmaß durch Vergleich der entsprechend modifizierten Histogramme der Referenz mit den entsprechenden Histogrammen des Prüflings gebildet wird.

3. Verfahren nach Anspruch 1 oder 2, dadurch gekenzeichnet, daß durch eine Schwellwertbildung eine Binarisierung des Histogramms der Farbvektorkomponenten durchgeführt wird und im mehrdimensionalen Histogramm der Farbvektorkomponenten die eingetragene Häufigkeit durch eine binäre Markierung ersetzt wird, welche angibt, ob die entsprechende Häufigkeit über oder unter der Schwelle liegt, und daß das Farbabweichungsmaß aus dem Vergleich der so binarisierten Histogramme der Referenz und des Prüflings abgeleitet wird.

4. Verfahren nach Anspruch 1 oder 2, dadurch gekenzeichnet, daß durch eine Schwellwertbildung eine Binarisierung des Histogramms der Farbvektorkomponenten durchgeführt wird und im mehrdimensionalen Histogramm der Farbvektorkomponenten die eingetragene Häufigkeit für Häufigkeiten, welche unter der Schwelle liegen, durch eine Markierung ersetzt wird und für Häufigkeiten, welche über der Schwelle liegen, durch eine Signifikanz zahl ersetzt wird, und daß das Farbabweichungsmaß aus dem Vergleich der so binarisierten Histogramme der Referenz und des Prüflings abgeleitet wird.

5. Verfahren nach Anspruch 4, dadurch gekennzeichnet, daß die Signifikanz zahl aus dem Betrag abgeleitet wird, um welchen die Häufigkeit die Schwelle überschreitet.

6. Verfahren nach Anspruch 4, dadurch gekenzeichnet, daß die Signifikanz zahl aus dem Betrag der euklidischen Distanz des betreffenden Farbvektors zum Schwerpunkt der von allen erfaßten Farbvektoren im Farbraum gebildeten Wolke abgeleitet wird.

7. Verfahren nach einem der Ansprüche 3 bis 6, dadurch gekennzeichnet, daß die binär markierten Histogramme der Farbvektorkomponenten durch Nachbarschaftsoperationen so verändert werden, daß einzelne unbesetzte Stellen aufgefüllt und durch Ausreißer gebildete Störstellen beseitigt werden.

8. Verfahren nach einem der Ansprüche 1 bis 7, dadurch gekennzeichnet, daß die Histogramme der Farbvektorkomponenten vor dem Vergleich geglättet werden.

9. Verfahren nach Anspruch 8, dadurch gekennzeichnet, daß die Glättungsfunktion für das mehrdimensionale Histogramm der Farbvektorkomponenten für alle oder einige Farbvektorkomponenenten unterschiedlich ist.

10. Verfahren nach Anspruch 8, dadurch gekennzeichnet, daß das Histogramm der Farbvektorkomponenten durch Inkrementierung eines mehrdimensionalen Speicherfeldes gebildet wird, welches durch die zu einem Adreßzeiger zusammengefaßten Farbvektorkomponenten der Referenz adressiert wird, und daß jeweils beim Inkrementieren der adressierten Speicherstelle auch die Speicherstellen mit inkrementiert werden, welche im Farbraum geometrische Nachbarn sind, allerdings um einen Teilbetrag, welcher entsprechend einer Abklingfunktion mit wachsender Distanz zu diesen Nachbarn gegen Null abnimmt.

11. Verfahren nach Anspruch 10, dadurch gekennzeichnet, daß die Abklingfunktion für alle oder einige der Farbvektorkomponenten des Histogramms unterschiedlich ist.

12. Verfahren nach Anspruch 10 oder 11, dadurch gekenzeichnet, daß diejenigen Werte des Histogramms inkrementiert werden, welche zu Farbvektoren von geometrisch im kontrollierten Bildfeld benachbarten Bildpunkten gehören, und daß die Werte des Histogramms dekrementiert werden, welche zu Farbvektoren gehören, welche zu vom bildgebenden Sensor mit erfaßten Bildpunkten gehören, welche infolge einer anderen Farbe oder einer lokalen Besonderheit nicht mit in die Farbkontrolle aufgenommen werden sollen.

13. Verfahren nach einem der Ansprüche 1 bis 12, dadurch gekennzeichnet, daß ein oder mehrere Farbabweichungsmaße durch Bildung eines oder mehrerer Distanzmaße zwischen dem Histogramm bzw. den Histogrammen der Referenz und dem Histogramm bzw. den Histogrammen des Prüflings gewonnen werden.

14. Verfahren nach Anspruch 13, dadurch gekennzeichnet, daß das oder die Distanzmaße skalare Maße sind.

15. Verfahren nach Anspruch 14, dadurch gekennzeichnet, daß ein Differenzhistogramm aus der komponentenweise gebildeten Differenz des Histogramms der Farbvektorkomponenten der Referenz zum entsprechenden Histogramm des Prüflings gebildet wird und daß ein skalares Distanzmaß aus geometrischen Parametern des Differenzhistogramms ermittelt wird.

16. Verfahren nach Anspruch 15, dadurch gekennzeichnet, daß als geometrischer Parameter die Fläche verwendet wird, welche das gesamte Differenzhistogramm mit den Abzissen seiner Komponenten aufspannt.

17. Verfahren nach Anspruch 13, dadurch gekennzeichnet, daß das Distanzmaß ein vektorielles Maß darstellt, dessen Komponenten die Distanz der Farbvektorkomponenten der Referenz zu den entsprechenden Farbvektorkomponenten des Prüflings darstellen.

18. Verfahren nach Anspruch 17, dadurch gekennzeichnet, daß ein Differenzhistogramm aus der komponentenweise gebildeten Differenz des Histogramms der Farbvektorkomponenten der Referenz zum entsprechenden Histogramm des Prüflings gebildet wird und daß das vektorielle Distanzmaß aus geometrischen Parametern des Differenzhistogramms abgeleitet wird.

19. Verfahren nach Anspruch 18, dadurch gekennzeichnet, daß das komponentenweise ermittelte Distanzmaß in die in der Farbmetrik geläufigen Werte umgerechnet und angezeigt wird.

20. Verfahren nach einem der Ansprüch 3 bis 7, dadurch gekennzeichnet, daß der Vergleich zwischen Referenz und Prüfling so durchgeführt wird, daß das binarisierte Histogramm der Referenz von allen für die Farbkontrolle relevanten Farbvektoren der Bildpunkte des Prüflings adressiert wird und eine Übereinstimmungsmaß zwischen der Farbe der Referenz und derjenigen des Prüflings aus der Anzahl der ausgelesenen Markierungen abgeleitet wird, welche der binären Markierung "Schwelle überschritten" entsprechen, bzw. aus der mit der ausgelesenen Signifikanz zahl bewerteten Anzahl dieser Markierungen gebildet wird.

21. Verfahren nach Anspruch 20, dadurch gekennzeichnet, daß als relevante Farbvektoren des Prüflings diejenigen Farbvektoren gelten, welche in einem gültigen Wertebereich der Farbkomponenten liegen.

22. Verfahren nach einem der Ansprüche 1 bis 21, dadurch gekennzeichnet, daß zur Kalibrierung des gesamten Systems stabile Farbkontrollreferenzen von dem Bildsensor erfaßt und abgespeichert werden, daß kontinuierlich oder von Zeit zu Zeit die gespeicherten Farbwerte der Farbkontrollreferenzen mit den aktuell aufgenommenen Farbwerten der Farbkontrollreferenzen verglichen werden und daß aus diesem Vergleich Korrekturwerte für die Korrektur der Farbwerte aller für die Farbkontrolle interessierenden Bildpunkte gewonnen werden.

23. Verfahren nach Anspruch 22, dadurch gekennzeichnet, daß sich die Farbkontrollreferenzen dauernd im Bildfeld der Sensoren befinden.

24. Verfahren nach einem der Ansprüche 1 bis 23, dadurch gekennzeichnet, daß die für die Farbkontrolle interessierenden Bildfeldteile anhand von gleichzeitig bildhaft erfaßten Markierungen oder Objektmustern rechnerisch so nachgeführt werden, daß sie auch bei während der Bildaufnahme ungenau positionierten Prüflingen immer mit den bei der Referenz festgelegten Bildfeldteilen übereinstimmen.

25. Verfahren nach einem der Ansprüche 1 bis 24, dadurch gekennzeichnet, daß mit Verfahren der Mustererkennung die zu kontrollierenden Bildfeldteile automatisch im Bildfeld der Sensoren gefunden werden und die Farbkontrolle auf die Bildpunkte dieser Bildfeldteile beschränkt wird.

26. Anordnung zur Durchführung des Verfahrens nach einem der Ansprüche 1 bis 25, gekennzeichnet durch eine Beleuchtungsanordnung zur Beleuchtung der Oberfläche der Referenz und des Prüflings, eine Anordnung aus einem oder mehreren farbtüchtigen bildgebenden Sensoren, insbesondere Farbmatrixkameras, Farbzeilenkameras oder farbtüchtigen Abtastern zur bildpunktweisen Erfassung der beleuchteten Oberfläche der Referenz und des Prüflings und zur Lieferung elektrischer Bildsignale, welche die Farbvektorkomponenten der erfaßten Bildpunkte darstellen, und durch eine Recheneinheit, welche die digitalisierten Signale der bildgebenden Sensoren empfängt und die einzelnen Schritte des Verfahrens programmgesteuert durchführt.

27. Anordnung nach Anspruch 26, dadurch gekennzeichnet, daß die die Farbvektorkomponenten darstellenden elektrischen Bildsignale der bildgebenden Sensoren digitalisiert und als Adresse an einen in der Recheneinheit enthaltenen Speicher angelegt werden, daß während einer Trainingsphase eine Referenz aufgenommen wird und alle adressierten Speicherstellen inkrementiert werden, daß alle gespeicherten Werte, welche eine vorgegebene Schwelle überschreiten, mit einer Markierungen versehen werden, daß in der Kontrollphase die durch alle Farbvektorkomponenten der zu kontrollierenden Bildpunkte adressierten Speicherstellen ausgelesen werden, daß mit Hilfe eines Zählers die Summe der ausgelesenen Markierungen gebildet wird und daß diese Summe als Maß für die Übereinstimmung ausgegeben und/oder als Steuersignal für eine Qualitätssortierung verwendet wird.

28. Anordnung nach Anspruch 26 oder 27, dadurch gekennzeichnet, daß bei der Erfassung des Prüflings und der Referenz gleichzeitig eine Anordnung von Farbkontrollreferenzen so im Bildfeld des bildgebenden Sensors bzw. der bildgebenden Sensoren angeordnet ist, daß sie gleichzeitig oder abwechselnd mit erfaßt wird.

29. Anordnung nach einem der Ansprüche 26 bis 28, dadurch gekennzeichnet, daß zur Farbkontrolle von bewegten Teilen entweder die bildgebenden Sensoren oder die Beleuchtung stroboskopisch betrieben werden.

30. Anordnung nach einem der Ansprüche 26 bis 29, dadurch gekennzeichnet, daß durch einen externen Sensor die Bildaufnahme bei bewegten Prüflingen dann ausgelöst wird, wenn sich der Prüfling in einer vorgegebenen Position im Bildfeld der bildgebenden Farbsensoren befindet.

## Claims

1. A method for colour control in the production process in which a sample and a reference of the sample are recorded pixel-by-pixel with the aid of the same arrangement consisting of one or more colour sensitive image-forming sensors, in particular colour matrix cameras, colour line cameras or colour sensitive point scanners, characterised by the following method steps:
- the colour values of all pixels or a subset of the pixels in the whole or in individual parts of the image field of the reference of the or each sensor recording the reference are put in the form of one or more multidimensional histograms of the colour vector components and stored in this form;
- in the same way, the color values of all or a subset of the pixels in the corresponding image field or in the corresponding parts of the image field of the or each sensor recording the sample are put in the form of one or more multidimensional histograms of the colour vector components;
- from the comparison of the histograms of the sample and the histograms of the reference, one or more colour deviation measures are determined for each image field to be controlled or for each part to be controlled of an image field.

2. A method according to claim 1, characterised in that disturbing shining spots and/or shadow zones and/or areas with uncertain colour values are automatically eliminated by removing the areas which have too little saturation and/or too strongly deviating intensity and/or an impermissible area of the hue and/or too low a frequency of occurence, by forming a threshold value in the histogram of the colour vector components, and that a colour deviation measure is formed by means of a comparison of the correspondingly modified histograms of the reference with the corresponding histograms of the sample.

3. A method according to claim 1 or 2, characterised in that a binarisation of the histogram of the colour vector components is performed by forming a threshold value and in the multidimensional histogram of the colour vector components, the frequency entered is replaced by a binary flag which specifies whether the corresponding frequency lies above or below the threshold and that the colour deviation measure is deduced from the comparison of the binarised histograms of the reference and of the sample.

4. A method according to claims 1 or 2, characterised in that a binarisation of the histogram of the colour vector components is performed by forming a threshold value and in the multidimensional histogram of the colour vector components, the frequency entered is replaced by a flag for frequencies, which lie below the threshold, and for frequencies which lie above the threshold, is replaced by a significance figure, and that the colour deviation measure is deduced from the comparison of the histograms of the reference and of the sample binarised in this way.

5. A method according to claim 4, characterised in that the significance figure is deduced from the amount by which the frequency exceeds the threshold.

6. A method according to claim 4, characterised in that the significance figure is deduced from the value of the Euclidean distance of the colour vector in question to the centre of gravity of the cloud formed in the colour space from all colour vectors recorded.

7. A method according to any one of claims 3 to 6, characterised in that the binarily marked histograms of the colour vector components are modified by means of neighbourhood operations in such a way that individual unoccupied locations are filled up and disturbance points formed by outliers are removed.

8. A method according to any one of claims 1 to 7, characterised in that the histograms of the colour vector components are smoothed before the comparison.

9. A method according to claim 8, characterised in that the smoothing function for the multidimensional histogram of the colour vector components is different for all or some of the colour vector components.

10. A method according to claim 8, characterised in that the histogram of the colour vector components is formed by incrementing a multidimensional memory field which is addressed by the colour vector components of the reference combined into an address pointer, and that when incrementing the addressed storage location, the storage locations are also incremented which are geometric neighbours in the colour space, however by a partial amount, which decreases to zero according to a decay function as the distance to these neighbours increases.

11. A method according to claim 10, characterised in that the decay function is different for each or some of the colour vector components of the histogram.

12. A method according to claim 10 or 11 characterised in that those values of the histogram are incremented which belong to colour vectors of pixels geometrically neighbouring in the controlled image field and that those values of the histogram are decremented which belong to colour vectors, which belong to pixels recorded by the image-forming sensor, which should not be included in the colour control because of another colour or a local peculiarity.

13. A method according to any one of claims 1 to 12, characterised in that one or more colour deviation measures are obtained by forming one or more distance measures between the histogram or histograms of the reference and the histogram or histograms of the sample.

14. A method according to claim 13, characterised in that the distance measure or measures are scalar measures.

15. A method according to claim 14, characterised in that a differential histogram is formed of the component-wise formed difference of the histogram of the colour vector components of the reference and the corresponding histogram of the sample and that a scalar distance measure is determined from the geometric parameters of the differential histogram.

16. A method according to claim 15, characterised in that as a geometric parameter the area is used which spans the whole differential histogram with the abscissas of its components.

17. A method according to claim 13, characterised in that the distance measure represents a vectorial measure, of which the components represent the distance of the colour vector components of the reference to the corresponding colour vector components of the sample.

18. A method according to claim 17, characterised in that a differential histogram is formed from the component-wise formed difference of the histogram of the colour vector components of the reference to the corresponding histogram of the sample and that the vectorial distance measure is deduced from geometric parameters of the differential histogram.

19. A method according to claim 18, characterised in that the component-wise determined distance measure is converted into the values conventionally used in colorimetry and displayed.

20. A method according to any one of claims 3 to 7 characterised in that the comparison between the reference and the sample is made in such a way that the binarised histogram of the reference is addressed by all colour vectors of the pixels of the sample relevant for the colour control and a coincidence measure is deduced between the colour of the reference and that of the sample from the number of flags read which correspond to the binary flag "threshold value exceeded" or is formed from the number of these flags weighted with the significance number read.

21. A method according to claim 20, characterised in that those colour vectors are considered relevant colour vectors of the sample which lie in a valid value range of the colour components.

22. A method according to any one of claims 1 to 21, characterised in that for the purposes of calibrating the whole system, stable colour control references are recorded and stored by the colour sensor, that continuously or from time to time the stored colour values of the colour control references are compared with the colour values of the colour control references taken at present and that correction values are obtained from this comparison for the correction of the colour values of all pixels of interest for the colour control.

23. A method according to claim 22, characterised in that the colour control references are located constantly in the image field of the sensors.

24. A method according to any one of claims 1 to 23, characterised in that the image field parts of interest for the colour control are tracked by calculation in such a way by means of simultaneously recorded flags or object patterns, that they correspond, even in the case of samples positioned imprecisely during image capture, always with the same image field parts determined in the reference.

25. A method according to any one of claims 1 to 24, characterised in that with methods of pattern recognition, the image field parts to be controlled are automatically found in the image field of the sensors and that the colour control is restricted to the pixels of these image field parts.

26. An arrangement for the implementation of the method according to any one of claims 1 to 25, characterised by an illumination arrangement for the illumination of the surface of the reference and of the sample, an arrangement consisting of one or more colour sensitive image-forming sensors, in particular colour matrix cameras, colour line cameras or colour sensitive scanners for pixel-by-pixel recording of the illuminated surface of the reference and of the sample and for the supply of electrical image signals which represent the colour vector components of the recorded pixels, and by a computing unit, which receives the digitised signals of the image-forming sensors and performs the individual steps of the method in a programme controlled manner.

27. An arrangement according to claim 26, characterised in that the electrical image signals of the image-forming sensors representing the colour vector components are digitised and applied as an address to a memory contained in the computing unit, that during a training phase, a reference is recorded and all addressed storage locations are incremented, that all stored values, which exceed a predetermined threshold are provided with a flag, that in the control phase the storage locations addressed by all colour vector components of the pixels to be controlled are read, that with the aid of a counter, the sum of the read flags is formed and that this sum is outputted as a measure for the coincidence and/or used as a control signal for a quality sort.

28. An arrangement according to claim 26 or 27 characterised in that during the recording of the sample and the reference an arrangement of colour control references is simultaneously arranged in the image field of the image-forming sensor or sensors in such a way that it is recorded simultaneously or alternately.

29. An arrangement according to any one of claims 26 to 28, characterised in that for the purpose of colour control of moved parts, either the image-forming sensors or the illumination are operated stroboscopically.

30. An arrangement according to any one of claims 26 to 29, characterised in that the image recording in the case of moved samples is triggered by an external sensor when the sample is located in a predetermined position in the image field of the image-forming colour sensor.

## Revendications

1. Procédé de contrôle de couleur en processus de production, dans lequel une éprouvette et une référence de cette éprouvette sont saisies par points d'image au moyen du même dispositif constitué d'un ou de plusieurs capteurs donnant une image en couleur, en particulier des caméras à matrice couleur, des caméras à ligne couleur ou des lecteurs de points en couleur, caractérisé par les étapes suivantes :
- les valeurs chromatiques de tous les points d'image ou d'une quantité inférieure de points d'image dans tout le champ d'image ou dans des parties de ce champ du ou de chaque capteur saisissant la référence sont mises sous la forme d'un ou de plusieurs histogrammes pluridimensionnels des composantes de vecteur couleur et mises en mémoire sous cette forme,
- de la même manière, les valeurs chromatiques de tous les points d'image ou d'une quantité inférieure de points d'image dans le champ d'image correspondant ou dans les parties correspondantes de ce champ du ou de chaque capteur saisissant l'éprouvette sont mises sous la forme d'un ou de plusieurs histogrammes pluridimensionnels des composantes de vecteur couleur,
- à partir de la comparaison des histogrammes de l'éprouvette et des histogrammes de la référence, pour chaque champ d'image à contrôler ou pour chaque partie à contrôler d'un champ d'image sont déterminées une ou plusieurs mesures d'écart chromatique.

2. Procédé selon la revendication 1, caractérisé par le fait que les endroits brillants gênants et/ou les zones d'ombre et/ou les domaines à valeurs chromatiques incertaines sont coupés automatiquement par élimination, par établissement de valeur de seuil dans l'histogramme des composantes de vecteur couleur, des domaines qui ont une trop faible saturation et/ou une luminosité s'écartant trop et/ou un domaine inadmissible de teinte et/ou une trop faible fréquence, et qu'une mesure d'écart chromatique est établie par comparaison des histogrammes, modifiés en conséquence, de la référence avec les histogrammes correspondants de l'éprouvette.

3. Procédé selon l'une des revendications 1 et 2, caractérisé par le fait qu'une mise sous forme binaire de l'histogramme des composantes de vecteur couleur est effectuée par un établissement de valeur de seuil, et dans l'histogramme pluridimensionnel des composantes de vecteur couleur, la fréquence portée est remplacée par une marque binaire qui indique si la fréquence correspondante est située au-dessus ou au-dessous du seuil, et que la mesure d'écart chromatique est déduite de la comparaison des histogrammes ainsi mises sous forme binaire de la référence et de l'éprouvette.

4. Procédé selon l'une des revendications 1 et 2, caractérisé par le fait qu'une mise sous forme binaire de l'histogramme des composantes de vecteur couleur est effectuée par un établissement de valeur de seuil, et dans l'histogramme pluridimensionnel des composantes de vecteur couleur, la fréquence portée est, pour les fréquences situées au-dessous du seuil, remplacée par une marque et, pour les fréquences situées au-dessus du seuil, remplacée par un nombre significatif, et que la mesure d'écart chromatique est déduite de la comparaison des histogrammes ainsi mises sous forme binaire de la référence et de l'éprouvette.

5. Procédé selon la revendication 4, caractérisé par le fait que le nombre significatif est déduit du montant duquel la fréquence dépasse le seuil.

6. Procédé selon la revendication 4, caractérisé par le fait que le nombre significatif est déduit de la valeur de la distance euclidienne du vecteur couleur considéré au centre de gravité du nuage formé dans l'espace chromatique par tous les vecteurs couleur saisis.

7. Procédé selon l'une des revendications 3 à 6, caractérisé par le fait que les histogrammes marqués en binaire des composantes de vecteur couleur sont modifiés par des opérations de voisinage de façon que des endroits inoccupés soient remplis et des défauts formés par des points aberrants soient éliminés.

8. Procédé selon l'une des revendications 1 à 7, caractérisé par le fait que les histogrammes des composantes de vecteur couleur sont lissés avant la comparaison.

9. Procédé selon la revendication 8, caractérisé par le fait que la fonction de lissage de l'histogramme pluridimensionnel des composantes de vecteur couleur est différente pour toutes ces composantes ou pour certaines de celles-ci.

10. Procédé selon la revendication 8, caractérisé par le fait que l'histogramme des composantes de vecteur couleur est établi par incrémentation d'une zone pluridimensionnelle de mémoire qui est adressée par les composantes de vecteur couleur de la référence réunies en un indicateur d'adresse, et qu'à chaque incrémentation de l'emplacement de mémoire adressé sont aussi incrémentés les emplacements de mémoire voisins géométriques dans l'espace chromatique, mais ce d'une quantité partielle qui décroît vers zéro selon une fonction de décroissance lorsque la distance à ces voisins croît.

11. Procédé selon la revendication 10, caractérisé par le fait que la fonction de décroissance est différente pour toutes les composantes de vecteur couleur de l'histogramme ou pour certaines de celles-ci.

12. Procédé selon l'une des revendications 10 et 11, caractérisé par le fait que sont incrémentées les valeurs de l'histogramme qui appartiennent à des vecteurs couleur de points d'image voisins géométriquement dans le champ d'image contrôlé, et que sont décrémentées les valeurs de l'histogramme qui appartiennent à des vecteurs couleur qui appartiennent à des points d'image cosaisis par le capteur donnant une image qui, en raison d'une autre couleur ou d'une particularité locale, ne doivent pas admis dans le contrôle de couleur.

13. Procédé selon l'une des revendications 1 à 12, caractérisé par le fait qu'une ou plusieurs mesures d'écart chromatique sont produites par établissement d'une ou de plusieurs mesures de distance entre l'histogramme ou les histogrammes de la référence et l'histogramme ou les histogrammes de l'éprouvette.

14. Procédé selon la revendication 13, caractérisé par le fait que la ou les mesures de distance sont des mesures scalaires.

15. Procédé selon la revendication 14, caractérisé par le fait qu'un histogramme différence est établi à partir de la différence établie par composantes entre l'histogramme des composantes de vecteur couleur de la référence et l'histogramme correspondant de l'éprouvette, et qu'une mesure scalaire de distance est établie à partir de paramètres géométriques de cet histogramme différence.

16. Procédé selon la revendication 15, caractérisé par le fait que, comme paramètre géométrique, est utilisée la surface qui couvre tout l'histogramme différence avec les abscisses de ses composantes.

17. Procédé selon la revendication 13, caractérisé par le fait que la mesure de distance représente une mesure vectorielle dont les composantes représentent la distance des composantes de vecteur couleur de la référence aux composantes de vecteur couleur correspondantes de l'éprouvette.

18. Procédé selon la revendication 17, caractérisé par le fait qu'un histogramme différence est établi à partir de la différence établie par composantes entre l'histogramme des composantes de vecteur couleur de la référence et l'histogramme correspondant de l'éprouvette, et que la mesure vectorielle de distance est déduite de paramètres géométriques de cet histogramme différence.

19. Procédé selon la revendication 18, caractérisé par le fait que la mesure de distance établie par composantes est convertie en les valeurs courantes en colorimétrie et indiquée.

20. Procédé selon l'une des revendications 3 à 7, caractérisé par le fait que la comparaison entre la référence et l'éprouvette est effectuée de façon que l'histogramme mis sous forme binaire de la référence soit adressé par tous les vecteurs couleur pertinents pour le contrôle de couleur des points d'image de l'éprouvette et qu'une mesure de concordance entre la couleur de la référence et celle de l'éprouvette soit déduite du nombre de marques lues qui correspondent à la marque binaire "seuil dépassé", ou soit établie à partir du nombre de ces marques évalué avec le nombre significatif lu.

21. Procédé selon la revendication 20, caractérisé par le fait que sont considérés comme vecteurs couleur pertinents de l'éprouvette les vecteurs couleur situés dans un domaine de valeurs valable des composantes chromatiques.

22. Procédé selon l'une des revendications 1 à 21, caractérisé par le fait que, pour le calibrage de tout le système, des références de contrôle de couleur stables sont saisies par le capteur d'image et mises en mémoire, que de façon continue ou de temps en temps, les valeurs chromatiques mises en mémoire des références de contrôle de couleur sont comparées aux valeurs chromatiques admises actuellement des références de contrôle de couleur et que de cette comparaison sont tirées des valeurs correctrices pour la correction des valeurs chromatiques de tous les points d'image intéressants pour le contrôle de couleur.

23. Procédé selon la revendication 22, caractérisé par le fait que les références de contrôle de couleur se trouvent en permanence dans le champ d'image des capteurs.

24. Procédé selon l'une des revendications 1 à 23, caractérisé par le fait que les parties du champ d'image intéressantes pour le contrôle de couleur sont suivies par calcul, au moyen de marques ou de figures objets saisies en même temps en image, de façon que, même en cas d'éprouvettes positionnées de manière inexacte pendant l'enregistrement d'image, elles concordent toujours avec les parties de champ d'image fixées pour la référence.

25. Procédé selon l'une des revendications 1 à 24, caractérisé par le fait que, par des procédés de reconnaissance de formes, les parties de champ d'image à contrôler sont trouvées automatiquement dans le champ d'image des capteurs et le contrôle de couleur est limité aux points d'image de ces parties de champ d'image.

26. Dispositif pour la mise en oeuvre du procédé selon l'une des revendications 1 à 25, caractérisé par un dispositif d'éclairage de la surface de la référence et de l'éprouvette, un dispositif constitué d'un ou de plusieurs capteurs donnant une image en couleur, en particulier des caméras à matrice couleur, des caméras à ligne couleur ou des lecteurs en couleur, pour la saisie par points d'image de la surface éclairée de la référence et de l'éprouvette et la fourniture de signaux électriques d'image qui représentent les composantes de vecteur couleur des points d'image saisis, et par un organe de calcul qui reçoit les signaux numérisés des capteurs donnant une image et exécute, commandé par programme, les différentes étapes du procédé.

27. Dispositif selon la revendication 26, caractérisé par le fait que les signaux électriques d'image des capteurs donnant une image qui représentent les composantes de vecteur couleur sont numérisés et appliqués comme adresse à une mémoire contenue dans l'organe de calcul, que, pendant une phase d'apprentissage, une référence est enregistrée et tous les emplacements de mémoire adressés sont incrémentés, que toutes les valeurs mémorisées qui dépassent un seuil fixé sont pourvues de marques, que, dans la phase de contrôle, les emplacements de mémoire adressés par toutes les composantes de vecteur couleur des points d'image à contrôler sont lus, que la somme des marques lues est établie au moyen d'un compteur et que cette somme est émise comme mesure de la concordance et/ou utilisée comme signal de commande pour un tri en qualité.

28. Dispositif selon l'une des revendications 26 et 27, caractérisé par le fait que, lors de la saisie de l'éprouvette et de la référence, un système de références de contrôle de couleur est en même temps placé dans le champ d'image du capteur ou des capteurs donnant une image, de façon qu'il soit saisi en même temps ou en alternance.

29. Dispositif selon l'une des revendications 26 à 28, caractérisé par le fait que, pour le contrôle de couleur de pièces en mouvement, soit les capteurs donnant une image, soit l'éclairage fonctionne(nt) de manière stroboscopique.

30. Dispositif selon l'une des revendications 26 à 29, caractérisé par le fait qu'un capteur extérieur déclenche l'enregistrement d'image dans le cas d'éprouvettes en mouvement lorsque l'éprouvette se trouve dans une position fixée dans le champ d'image des capteurs couleur donnant une image.
